# EUROPÄISCHE PATENTSCHRIFT

(11) **EP 1 811 624 B1**
(45) Veröffentlichungstag und Bekanntmachung des Hinweises auf die Patenterteilung: **19.08.2009**
(21) Anmeldenummer: 07001354.5
(22) Anmeldetag: 23.01.2007
(51) Int. Cl.: H02G 3/18

(54) **Bodeneinbaukassette für elektrische Installationsgeräte**
Floor installation box for electric installation devices
Cassette d'installation au sol pour appareils d'installation

(30) Priorität: 23.01.2006 DE 202006001321 U
(43) Veröffentlichungstag der Anmeldung: 25.07.2007
(73) Patentinhaber: OBO Bettermann GmbH & Co. KG, 58710 Menden (DE)
(72) Erfinder: Raschke, Jörg, 51674 Wiehl (DE); Hütt, Christoph, 51645 Gummersbach (DE)
(74) Vertreter: Patentanwälte Ruff, Wilhelm, Beier, Dauster & Partner

(56) Entgegenhaltungen:
- EP-A- 1 124 298
- WO-A-03/104587
- DE-A1- 19 639 521
- DE-U- 7 335 872

## Beschreibung

Die Erfindung betrifft eine Bodeneinbaukassette für elektrische Installationsgeräte mit einem Oberteil und einem Unterteil, wobei Oberteil und Unterteil mittels Nivelliereinrichtungen zueinander verschiebbar sind,
wobei eine seitliche Begrenzung der Bodeneinbaukassette bildende Außenwände von Oberteil und Unterteil im Wesentlichen glattflächig ausgebildet sind und wobei die Außenwände im Wesentlichen zueinander fluchten oder lediglich einen geringen Versatz im Bereich der Materialstärke der Außenwände aufweisen.

Aus dem deutschen Gebrauchsmuster DE -U- 660 6421 ist eine Zugdose für elektrische Unterflurinstallationen bekannt, die ein Unterteil und ein relativ zum Unterteil verschiebbares Oberteil aufweist. Oberteil und Unterteil sind mittels Nivellierschrauben verschiebbar, die außerhalb einer Außenwand von Oberteil bzw. Unterteil angeordnet sind. Oberteil und Unterteil sind teleskopartig ineinander verschiebbar ausgebildet. Die bekannte Zugdose wird auf einer Decke eines Gebäudes befestigt und die Oberkante des Oberteils wird auf die vorgesehene Estrichhöhe ausnivelliert. Beim Ausbringen des Estrichs wird die Zugdose dann seitlich vom Estrich umschlossen und dadurch im Estrich verankert.

Aus der europäischen Offenlegungsschrift EP 1 124 298 A1 ist eine Unterflurgerätedose zum Einsetzen in eine Ausnehmung in einer Bodenoberfläche bekannt. Die Unterflurgerätedose weist einen umlaufenden Rahmen auf, der mit Rastleitern zum Einsetzen von Gerätebechern zum Einbau von Installationsgeräten versehen ist.

Aus dem deutschen Gebrauchsmuster DE 7 335 672 U ist eine Bodeneinbaukassette für elektrische Installationsgeräte bekannt, bei der ein Oberteil und ein Unterteil jeweils aus einem nach oben offenen Rahmen gebildet sind. In das Oberteil kann ein Deckel eingesetzt werden. Der nach oben offene Rahmen des Oberteils wird so in den nach oben offenen Rahmen des Unterteils eingesetzt, dass eine seitliche Begrenzung der Bodeneinbaukassette bildende Außenwände von Oberteil und Unterteil nur einen geringen Versatz im Bereich der Materialstärke der Außenwände aufweisen. Das Oberteil liegt auf Gewindebolzen auf, die drehbar am Unterteil befestigt sind. Das Oberteil kann dadurch in Bezug zum Unterteil nivelliert werden. Der Deckel ist ebenfalls mit Nivellierschrauben versehen und kann zum Oberteil nivelliert werden. Insgesamt bilden das Unterteil, das Oberteil und der Deckel eine Anordnung aus drei ineinander gesetzten, nach oben offenen Rahmen, die gegeneinander mittels separater Nivelliermittel in der Höhe einstellbar sind.

Mit der Erfindung soll eine auch nachträglich nivellierbare Bodeneinbaukassette für unterschiedlichste Bodenarten bereitgestellt werden.

Erfindungsgemäß ist hierzu eine Bodeneinbaukassette für elektrische Installationsgeräte mit einem Oberteil und einem Unterteil vorgesehen,
wobei Oberteil und Unterteil mittels Nivelliereinrichtungen zueinander verschiebbar sind, bei der eine seitliche Begrenzung der Bodeneinbaukassette bildende Außenwände von Oberteil und Unterteil im Wesentlichen glattflächig ausgebildet sind und bei der die Außenwände im Wesentlichen zueinander fluchten oder lediglich einen geringen Versatz im Bereich der Materialstärke der Außenwände aufweisen und bei der das Oberteil einen nach oben offenen umlaufenden Rahmen als Auflage für einen Kassettendeckel und einen nach unten offenen umlaufenden Rahmen aufweist, der mit einem umlaufenden Flansch gegen einen umlaufenden Flansch des nach oben offenen Rahmens gelegt ist und der eine sich an den nach oben offenen Rahmen in Richtung nach unten anschließende, umlaufende Schürze aufweist.

Indem die Außenwände von Oberteil und Unterteil glattflächig ausgebildet sind und im Wesentlichen zueinander fluchten, kann die Bodeneinbaukassette auch nach dem Umgießen mit Bodenestrich noch nivelliert werden, da die glatten Außenwände zwar in den Estrich eingebettet sind, sich die Außenwand des Oberteils aber mit einer vergleichsweise geringen Losbrechkraft von dem umschließenden Estrich lösen kann. Dies ist im übrigen auch möglich, wenn die Außenwände von Oberteil und Unterteil lediglich einen geringen Versatz im Bereich der Materialstärke der Außenwände aufweisen. Auch in diesem Fall ist eine nachträgliche Nivellierung möglich, speziell dann, wenn das Oberteil, dessen Außenwand die Außenwand des Unterteils umgibt, beim Nivellieren lediglich nach oben verschoben werden soll. Aufgrund der glattflächigen Außenwände von Oberteil und Unterteil ist es aber auch ohne weiteres möglich und gegebenenfalls zweckmäßig, die erfindungsgemäße Bodeneinbaukassette mit einer umlaufenden Dehnungsfuge in einen Fußboden einzubauen. Ebenfalls möglich ist der nachträgliche Einbau der erfindungsgemäßen Bodeneinbaukassette in einen bestehenden Fußboden, da lediglich eine dem Außenumfang der Bodeneinbaukassette entsprechende Öffnung in den Boden eingebracht werden muss, in die die Bodeneinbaukassette aufgrund ihrer glattflächigen Außenwände dann problemlos eingesetzt werden kann. Darüber hinaus ist die erfindungsgemäße Bodeneinbaukassette für Fußbodenaufbauten aller Art geeignet, beispielsweise Estriche, Trockenestriche, Holzböden und dergleichen.

In Weiterbildung der Erfindung sind die Nivelliereinrichtungen innerhalb eines von den Außenwänden von Oberteil und Unterteil umschlossenen Innenraums angeordnet und die Nivelliereinrichtungen bestehen aus einem mit einer Bodenplatte des Unterteils verbundenen Gewindebolzen und einem mit dem Oberteil verbundenen Rohr, wobei das Rohr mit seinem oberen Ende an dem sich waagrecht nach innen erstreckenden Flansch des nach oben offenen Rahmens befestigt ist.

Auf diese Weise können glattflächige Außenwände realisiert werden und die Nivelliereinrichtungen sind geschützt im Innenraum der Bodeneinbaukassette angeordnet. Dies ermöglicht es beim Ausbringen von flüssigem Estrich, dass die Nivelliereinrichtungen auch nach dem Aushärten des Estrichs noch problemlos betätigt werden können.

In Weiterbildung der Erfindung definieren die Außenwände von Oberteil und Unterteil einen quadratischen, rechteckigen oder kreisförmigen Außenumfang der Bodeneinbaukassette.

Ein geometrisch regelmäßiger Außenumfang der Bodeneinbaukassette erleichtert das nachträgliche Einbringen von Öffnungen für die Bodeneinbaukassette in einen fertiggestellten Fußboden.

In Weiterbildung der Erfindung weist das Unterteil eine Bodenplatte auf, die mit vorbereiteten Öffnungen zum Einführen von Leerrohren, Kabeln oder dergleichen versehen ist.

Auf diese Weise können Leerrohre oder Kabel auch durch die Bodenplatte hindurch in die Bodeneinbaukassette hineingeführt werden, was deren universellen Einsatz für unterschiedlichste Bodenarten und Bodenaufbauten erlaubt. Vorbereitete Öffnungen zum Einführen von Leerrohren oder Kabeln können auch in den Außenwänden vorgesehen sein und sowohl im Boden als auch an den Außenwänden jeweils mit ausbrechbaren Deckeln versehen sein. Bei Ausbildung der Bodeneinbaukassette als Blechbiege- und Blechstanzteil können die ausbrechbaren Deckel durch lediglich teilweises Durchstanzen der Öffnungen ausgebildet werden.

In Weiterbildung der Erfindung ist das Oberteil mit wenigstens zwei gegenüberliegenden Rastleitern zum Einsetzen von Gerätebechern zum Einbau von Installationsgeräten versehen.

In Weiterbildung der Erfindung sind das Oberteil und/oder das Unterteil als Blechbiegeteil ausgebildet.

Auf diese Weise lässt sich eine sehr stabile Ausführung der Bodeneinbaukassette realisieren, die darüber hinaus und speziell dann, wenn das Oberteil aus Edelstahl gefertigt ist, auch ein sehr gefälliges Aussehen aufweist. Die erfindungsgemäße Bodeneinbaukassette ist für den bündigen Einbau in eine Bodenoberfläche vorgesehen, so dass bei der Ausführung als Blechbiegeteil lediglich die oberen Kanten des Oberteils und der Kassettendeckel sichtbar sind. Der Kassettendeckel kann ebenfalls schalenartig als Blechbiegeteil ausgebildet werden und mit einem Bodenbelag versehen werden, so dass auch vom Kassettendeckel im Wesentlichen lediglich ein Schnurauslass und die oberen Kanten des umlaufenden Rahmens sichtbar sind.

Bei einer erfindungsgemäßen Bodeneinbaukassette kann das Oberteil mit einem umlaufenden Rahmen zum Aufnehmen eines Kassettendeckels versehen sein, wobei der Rahmen an wenigstens zwei gegenüberliegenden Rahmenschenkeln im an die jeweilige Rahmenecke angrenzenden Bereich mit Ausnehmungen zum Aufnehmen von Schwenklagerzapfen des Kassettendeckels versehen ist. Auf diese Weise lässt sich der Kassettendeckel schwenkbar unmittelbar in dem Rahmen des Oberteils der Bodeneinbaukassette lagern und es sind keine separaten Scharniere zur schwenkbeweglichen Verbindung von Kassettendeckel und Oberteil erforderlich. Geeignete Ausnehmungen können an wenigstens vier Ecken des umlaufenden Rahmens vorgesehen werden, um alternative Öffnungsrichtungen des Kassettendeckels zu ermöglichen. Der Kassettendeckel ist mit einer Grundplatte versehen und die Schwenklagerzapfen sind als Vorsprünge an der Grundplatte ausgebildet. Bei einer Ausführung des Kassettendeckels als Blechbiegeteil sind die Vorsprünge als Abschnitte der Grundplatte ausgebildet, die nicht zusammen mit den Randbereichen der Grundplatte abgebogen sind. Die Schwenklagerzapfen können somit mittels einer U-artigen Ausnehmung im Randbereich der Grundplatte gebildet werden, wobei der Randbereich dann senkrecht zur Grundplatte nach oben abgebogen wird und lediglich die die Schwenklagerzapfen bildenden Vorsprünge in der Ebene der Grundplatte verbleiben.

Zweckmäßigerweise weisen die Ausnehmungen kreisringabschnittsförmige Bereiche auf. Auf diese Weise kann eine Schwenklagerung des Kassettendeckels bei gleichzeitiger seitlicher Verschiebung des Kassettendeckels ermöglicht werden. Dies ist vorteilhaft, da die Schwenklagerzapfen dadurch deutlich unterhalb einer eventuellen Bodenoberfläche angeordnet werden können und durch die kombinierte Dreh- und Verschiebebewegung des Kassettendeckels beim Öffnen dennoch ein geringes Spiel zwischen umlaufendem Rahmen des Oberteils und dem Außenumfang des Kassettendeckels realisiert werden kann. Zweckmäßigerweise weisen die Ausnehmungen eine bogenförmige Gleitfläche für Schwenkzapfen eines Kassettendeckels auf. Auf diese Weise wird der Kassettendeckel gleichzeitig geschwenkt und durch Bewegung entlang der bogenförmigen Gleitfläche seitlich verschoben. Oberhalb des in einer Seitenansicht der Bodeneinbaukassette höher liegenden Endes der bogenförmigen Gleitfläche ist eine Erweiterung der Ausnehmung nach oben angeordnet. In diese Ausnehmung kann der jeweilige Schwenklagerzapfen dann eindringen, wenn dieser um 90° geöffnet wird. Wenigstens eine der Ausnehmungen weist einen sich von der jeweiligen Rahmenecke weg erstreckenden Schlitz auf. Ein solcher Schlitz dient zum Einführen der Schwenkzapfen, indem nämlich der Kassettendeckel zunächst schräg in den Rahmen des Oberteils eingesetzt wird, der Schwenkzapfen dadurch in den Schlitz eingreifen kann und erst dann der Kassettendeckel passend zum Rahmen des Oberteils ausgerichtet wird. Der Schlitz im Rahmen ist dabei vorteilhafterweise so hoch wie der Schwenkzapfen breit ist. Bei einem quadratischen Schwenkzapfen ist dadurch das Einführen in den Schlitz nur bei exakt senkrecht stehendem Kassettendeckel möglich. Auf diese Weise muss nicht befürchtet werden, dass beim Öffnen des Kassettendeckels der Schwenkzapfen versehentlich in den Schlitz hineingerät, da bei einem Öffnungswinkel von weniger als 90° der Schwenkzapfen diagonal bzw. schräg verkippt vor dem Schlitzbeginn steht und daher nicht in den Schlitz eingeführt werden kann.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine perspektivische Ansicht einer erfindungsgemäßen Bodeneinbaukassette gemäß einer bevorzugten Ausführungsform,
- Fig. 2: die Bodeneinbaukassette der Fig. 1 zusätzlich mit Kassettendeckel,
- Fig. 3: eine Schnittansicht der Bodeneinbaukassette der Fig. 1 im zusammengeschobenen Zustand und
- Fig. 4: eine der Fig. 3 analoge Schnittansicht der erfindungsgemäßen Bodeneinbaukassette im auseinandergezogenen Zustand.

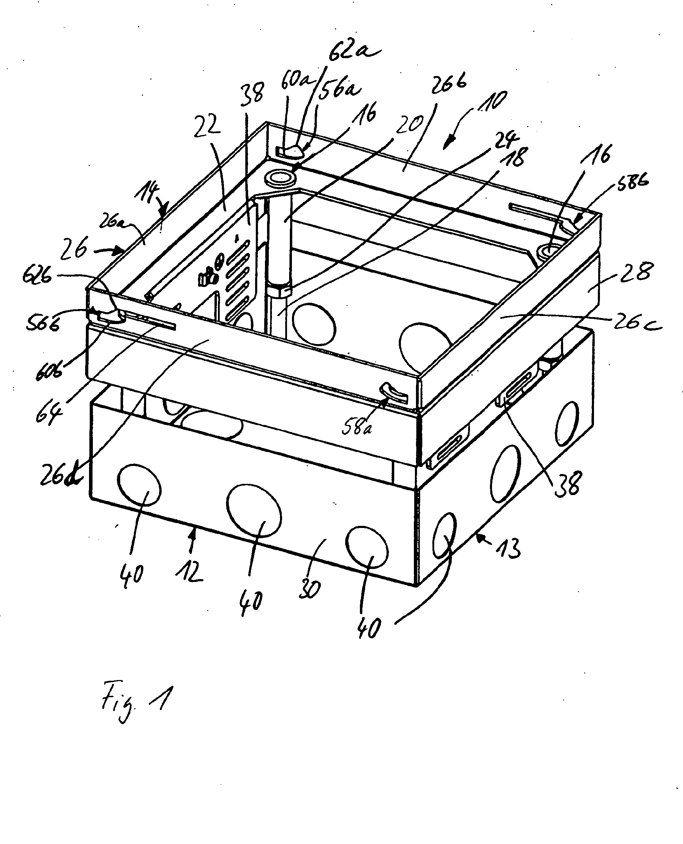

Die Bodeneinbaukassette 10 der Fig. 1 weist ein Unterteil 12 und ein Oberteil 14 auf, die mittels vier Nivellierschrauben 16 zueinander verschiebbar miteinander verbunden sind. Die Nivellierschrauben 16 sind jeweils in den Ecken des quadratischen Außenumfangs von Oberteil 14 und Unterteil 12 angeordnet. Die Nivelliereinrichtungen 16 bestehen dabei jeweils aus einem mit einer Bodenplatte 13 des Unterteils 12 drehbar verbundenen Gewindebolzen 18, der in ein fest mit dem Oberteil 14 verbundenes Rohr 20 eingreift. Das Rohr 20 ist mit seinem oberen Ende dabei an einem sich waagrecht nach innen erstreckenden umlaufenden Flansch 22 befestigt und an seinem anderen Ende mit einer Sechskantmutter 24 versehen. Ein der Bodenplatte abgewandtes Ende des Gewindebolzens 18 ist durch die obere stirnseitige Öffnung des Rohres 20 hindurch zugänglich und beispielsweise mit einem Schlitz versehen. Wird der Bolzen 18 nun relativ zum Rohr 20 verdreht, kann das Oberteil 14 relativ zum Unterteil 12 verschoben werden. Die Nivelliereinrichtungen 16 liegen dabei, wie in Fig. 1 gut zu erkennen ist, innerhalb eines Außenumfangs der Bodeneinbaukassette 10 und sind dadurch geschützt untergebracht, vor allem dann, wenn die Bodeneinbaukassette 10 vor dem Aufbringen eines Bodenestrichs angeordnet wird.

Wie in Fig. 1 zu erkennen ist, weist das Oberteil 14 einen umlaufenden Rahmen 26 aus Rahmenschenkeln 26a, 26b, 26c, 26d auf, der zusammen mit dem ebenfalls umlaufenden und rechtwinklig zu den Rahmenschenkeln 26a, 26b, 26c, 26d angeordneten Flansch 22 einstückig als Blechbiegeteil ausgebildet ist und eine stabile Auflage für einen Kassettendeckel bildet. An den umlaufenden Rahmen 26 schließt sich in Richtung nach unten eine ebenfalls umlaufende Schürze 28 an, die an ihrer Außenseite glattflächig ausgebildet ist. Eine Außenwand des Oberteils 14 wird somit durch die Außenseite der Rahmenschenkel 26a, 26b, 26c, 26d und die Außenseite der Schürze 28 gebildet.

Das Unterteil 12 ist schalenartig ebenfalls als Blechbiegeteil ausgebildet und weist eine umlaufende und senkrecht von der Bodenplatte 13 abgebogene Außenwand 30 auf. Wie die umlaufende Schürze 28 des Oberteils 14 besteht auch die Außenwand 30 des Unterteils 12 aus vier jeweils rechteckigen Abschnitten, die an den Ecken aneinander stoßen und auf diese Weise die umlaufende Außenwand 30 bilden.

Wie in Fig. 1 zu erkennen ist, entsteht durch die Außenseiten der Rahmenschenkel 26a, 26b, 26c, 26d die Außenseite der Schürze 28 und die Außenseite der Außenwand 30 des Unterteils 12 eine glattflächige Außenfläche der gesamten Bodeneinbaukassette 10, die keinerlei vorragende Bauteile und auch keine Hinterschnitte, die über die verwendete Materialstärke hinausgehen, aufweist. Es ist dadurch möglich, die Bodeneinbaukassette 10 in einfacher Weise auch nachträglich in eine Öffnung in einem Fußboden einzusetzen. Am Fußboden befestigt werden kann die Bodeneinbaukassette 10 dann durch Schrauben, die durch Öffnungen in der Bodenplatte 13 hindurch in den Fußboden eingreifen.

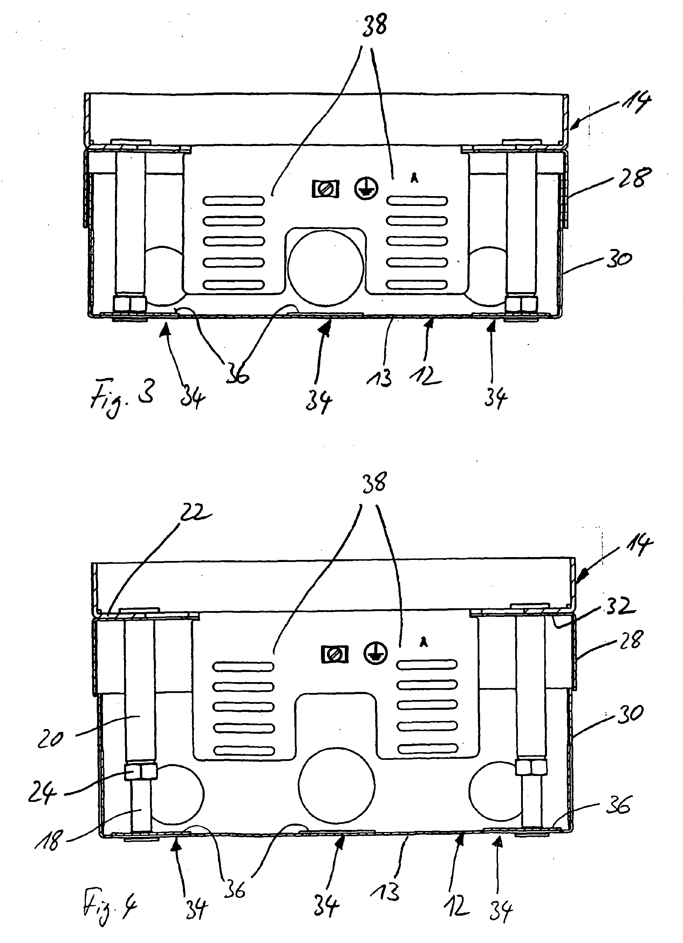

Die Außenabmessungen von Oberteil 14 und Unterteil 12 sind dabei im Wesentlichen gleich und, wie anhand der Fig. 3 und 4 zu erkennen ist, lediglich etwa um den Betrag der Materialstärke der Schürze 28 des Oberteils 14 verschieden. Das Oberteil 14 kann durch seine glatte Außenfläche dadurch auch nach dem Umgeben der Bodeneinbaukassette 10 mit Estrich problemlos nivelliert werden. Darüber hinaus kann die erfindungsgemäße Bodeneinbaukassette 10 auch in beliebigen Fußböden angeordnet werden, beispielsweise auch in Holzböden oder dergleichen. Auch nach dem Einbau kann das Oberteil 14 aufgrund seiner glatten Außenfläche relativ zu einer Bodenoberfläche und relativ zum Unterteil 12 verschoben und dadurch nivelliert werden.

In den Darstellungen der Fig. 3 und Fig. 4 ist zu erkennen, dass das Oberteil 14 und das Unterteil 12 ineinander teleskopierbar ausgebildet sind. Ein Innenumfang der umlaufenden Schürze 28 des Oberteils 14 entspricht hierzu im Wesentlichen dem Außenumfang der Außenwand 30 des Unterteils 12. In der Darstellung der Fig. 3 umgibt die umlaufende Schürze 28 des Oberteils 14 die Außenwand 30 des Unterteils 12 abschnittsweise, wohingegen in dem Zustand der Fig. 4 das Oberteil 14 so weit vom Unterteil 12 entfernt wurde, dass die Unterkante der Schürze 28 die Oberkante der Außenwand 30 gerade noch überdeckt.

Anhand der Darstellungen der Fig. 3 und 4 ist auch zu erkennen, dass die Schürze 28 Teil eines nach unten offenen Rahmens ist, der mit einem sich nach innen erstreckenden umlaufenden Flansch 32 gegen den umlaufenden Flansch 22 des Rahmens 26 gelegt ist.

Anhand der Fig. 3 und 4 ist weiter zu erkennen, dass das Unterteil 12 in seiner Bodenplatte 13 mit mehreren vorbereiteten Öffnungen 34 zum Einführen von Leerrohren oder Kabeln in die Bodeneinbaukassette 10 versehen ist. Die vorbereiteten Öffnungen 34 sind dabei jeweils mit ausbrechbaren Deckeln 36 versehen. Die Öffnungen 34 und Deckel 36 werden dadurch ausgebildet, dass die Öffnungen 34 lediglich teilweise durchgestanzt werden. Anhand der Fig. 1 ist auch zu erkennen, dass alle vier Seiten der Außenwand 30 des Unterteils 12 mit vorbereiteten Öffnungen 40 zum Einführen von Leerrohren oder Kabeln versehen sind, jeweils versehen mit ausbrechbaren Deckeln.

Anhand der Darstellung der Fig. 1 bis 4 ist weiter zu erkennen, dass an zwei gegenüberliegenden Seiten des umlaufenden Flansches 22 des Oberteils 14 Rastleitern 38 vorgesehen sind, die zum Einhängen von Gerätebechern zum Einbauen von elektrischen Installationsgeräten vorgesehen sind. Die Rastleitern 38, der umlaufende Flansch 22 und der umlaufende Rahmen 26 sind einstückig aus einem geeigneten Blechzuschnitt durch Biegevorgänge hergestellt.

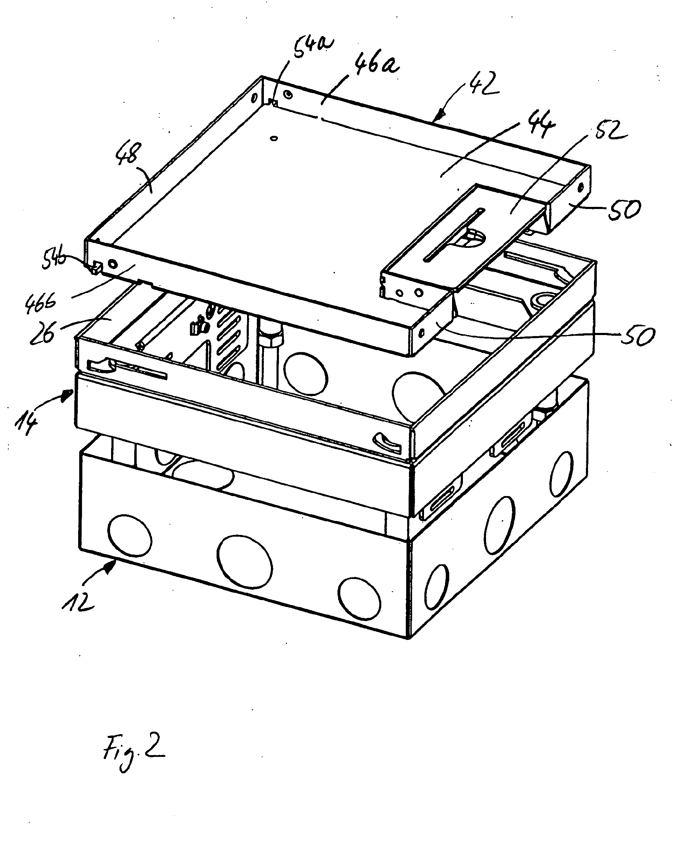

Die Darstellung der Fig. 2 zeigt zusätzlich zur Darstellung der Fig. 1 einen Kassettendeckel 42, der in den umlaufenden Rahmen 26 des Oberteils 14 eingesetzt werden kann. Der Kassettendeckel 42 ist ebenfalls als Blechbiegeteil ausgeführt und weist eine Grundplatte 44 sowie von der Grundplatte 44 senkrecht nach oben abgebogene Seitenwände 46a, 46b, 48 und 50 auf. Die beiden Seitenwände 50 erstrecken sich jeweils lediglich über einen Teil der Kantenlänge der Grundplatte 44 und zwischen den beiden Seitenwänden 50 ist ein an und für sich konventioneller Schnurauslass 52 im Kassettendeckel 42 angeordnet.

Der Kassettendeckel 42 ist an seiner, dem Schnurauslass 52 gegenüberliegenden Kante mit zwei aneinander gegenüberliegend angeordneten Schwenklagerzapfen 54a, 54b versehen. Die Schwenklagerzapfen 54a, 54b ragen jeweils über die Außenfläche der Seitenwände 46a bzw. 46b hinaus. Wie in Fig. 2 zu erkennen ist, weisen die Schwenklagerzapfen 54a, 54b jeweils einen quadratischen Querschnitt auf. Die Schwenklagerzapfen 54a, 54b sind auf Höhe der Grundplatte 44 angeordnet und dadurch ausgebildet, dass in einem zunächst ebenen Blechzuschnitt eine U-förmige Ausnehmung angebracht wird. Im Bereich des jeweils offenen Endes der U-förmigen Ausnehmung wird der Blechzuschnitt dann senkrecht nach oben abgebogen. Auf diese Weise werden die Grundplatte 44 sowie die jeweils senkrecht hierzu abgebogenen Seitenwände 46a, 46b gebildet. Die Schwenklagerzapfen 54a, 54b werden nicht abgebogen, da sie von der übrigen Seitenwand 46a bzw. 46b durch die U-förmige Ausnehmung getrennt sind.

Um die Schwenklagerzapfen 54a, 54b aufzunehmen, sind in dem umlaufenden Rahmen 26 insgesamt vier Ausnehmungen 56a, 56b sowie 58a und 58b angeordnet. Die Ausnehmungen 56a, 56b sind in den Rahmenschenkeln 26b bzw. 26d und einander gegenüberliegend angeordnet und in gleicher Weise sind die Ausnehmungen 58a, 58b in den gegenüberliegenden Schenkeln 26d bzw. 26b des Rahmens 26 angeordnet. Um den Kassettendeckel 42 schwenkbar am Oberteil 14 zu lagern, wird der Schwenklagerzapfen 54a in die Ausnehmung 56a eingeführt und der Schwenklagerzapfen 54b wird in die Ausnehmung 56b eingeführt. Um eine alternative Öffnungsrichtung des Kassettendeckels 42 zu realisieren, kann der Schwenklagerzapfen 54a auch in die Ausnehmung 58a eingeführt und der Schwenklagerzapfen 54b in die Ausnehmung 58b eingeführt werden. Die Ausnehmungen 56a und 58a sind zueinander identisch ausgebildet und die Ausnehmungen 56b und 58b sind zueinander identisch ausgebildet.

Wie anhand der Fig. 1 und 2 zu erkennen ist, weisen die Ausnehmungen 56a, 56b, 58a, 58b jeweils einen kreisringabschnittsförmigen Bereich auf, der nach unten, zur umlaufenden Schürze 28 hin von einer bogenförmigen Gleitfläche 60a, 60b begrenzt wird. Auf dieser bogenförmigen Gleitfläche 60a, 60b gleitet der Schwenkzapfen 54a, 54b während der Öffnungsbewegung des Kassettendeckels 42 entlang. Durch die beschriebene Ausgestaltung der Ausnehmung 56a, 56b wird der Kassettendeckel 42 beim Öffnen gegenüber dem Oberteil 14 sowohl geschwenkt als auch seitlich verschoben. Es ist dadurch möglich, die Schwenkzapfen 54a, 54b auf Höhe der Grundplatte 44 und somit unterhalb einer Bodenoberfläche anzuordnen und dennoch eine Passung zwischen dem Außenumfang des Kassettendeckels 42 und dem Innenumfang des umlaufenden Rahmens 26 des Oberteils 14 vergleichsweise eng zu wählen. Denn das Spiel zwischen den Seitenwänden 48, 50 des Kassettendeckels 42 und den jeweils angrenzenden Rahmenschenkeln 26a bzw. 26c des Rahmens 26 muss lediglich so groß sein, dass beim Öffnen des Kassettendeckels 42 die Seitenwände 50 über die obere Kante des umlaufenden Randes 26 hinaus gelangen.

Die Ausnehmungen 56a, 56b sind gegenüberliegend dem höheren Ende der bogenförmigen Gleitflächen 60a, 60b jeweils mit einer sich nach oben, zur Oberkante des umlaufenden Rahmens 26 hin erstreckenden Ausnehmung 62a, 62b versehen. Besonders gut ist dies an der Ausnehmung 56a zu erkennen, bei der Ausnehmung 56b geht von der Erweiterung 62b ein horizontaler Schlitz 64 aus, dessen Funktion noch erläutert wird. Die Erweiterungen 62a, 62b erlauben es, dass sich die Schwenklagerzapfen 54a, 54b jeweils relativ zum Oberteil 14 nach oben bewegen und auf diese Weise eine Öffnung des Kassettendeckels 42 um 90° erlauben.

Um den Kassettendeckel 42 in die Ausnehmungen 56a, 56b einzusetzen, wird zunächst der Schwenklagerzapfen 54a in die Ausnehmung 56a eingeführt. Der Kassettendeckel 42 wird dann so ausgerichtet, dass der Schwenklagerzapfen 54b in das Ende des Schlitzes 64 eingreifen kann, das der Ausnehmung 56b am weitesten entfernt ist. Der Schwenklagerzapfen 54b kann daraufhin entlang dem Schlitz 64 verschoben werden, um letztendlich in der Ausnehmung 56b zu liegen zu kommen.

Der Schlitz 64 ist dabei vorteilhafterweise genauso hoch wie der Schwenklagerzapfen 54b breit ist. Der Schwenklagerzapfen 54b kann dann lediglich in einer Stellung in den Schlitz 64 eingreifen, nämlich dann, wenn der Kassettendeckel 42 senkrecht zur Oberkante des umlaufenden Rahmens 26 ausgerichtet ist. Beim Öffnen des Kassettendeckels 42 kann auf diese Weise verhindert werden, dass der Schwenklagerzapfen 54b versehentlich in den Schlitz 64 hinein gerät und sich der Kassettendeckel 42 dadurch aus seiner Schwenklagerung löst, wenn der Öffnungswinkel des Kassettendeckels 42 kleiner als 90° ist.

## Patentansprüche

1. Bodeneinbaukassette für elektrische Installationsgeräte mit einem Oberteil (14) und einem Unterteil (12), wobei Oberteil (14) und Unterteil (12) mittels Nivelliereinrichtungen (16) zueinander verschiebbar sind, die eine seitliche Begrenzung der Bodeneinbaukassette (10) bildende Außenwände von Oberteil (14) und Unterteil (12) im Wesentlichen glattflächig und ohne Hinterschnitte ausgebildet sind und im Wesentlichen zueinander fluchten oder einen geringen Versatz im Bereich der Materialstärke der Außenwände aufweisen, **dadurch gekennzeichnet, dass** das Oberteil (14) einen umlaufenden nach oben offenen Rahmen (26) als Auflage für einen Kassettendeckel (42) und einen umlaufenden nach unten offenen Rahmen aufweist, der mit einem umlaufenden Flansch (32) gegen einen umlaufenden Flansch (22) des nach obenen offenen Rahmens (26) gelegt ist und der eine sich an den nach oben offenen Rahmen (26) in Richtung nach unten anschließende, umlaufende Schürze (28) aufweist.

2. Bodeneinbaukassette nach Anspruch 1, **dadurch gekennzeichnet, dass** die Nivelliereinrichtungen (16) innerhalb eines von den Außenwänden von Oberteil (14) und Unterteil (12) umschlossenen Innenraums angeordnet sind und dass die Nivelliereinrichtungen (16) aus einem mit einer Bodenplatte (13) des Unterteils (12) verbundenen Gewindebolzen (18) und einem mit dem Oberteil (14) verbundenen Rohr (20) bestehen und wobei das Rohr (20) mit seinem oberen Ende an dem sich waagrecht nach innen erstreckenden Flansch (22) des nach oben offenen Rahmens (26) befestigt ist.

3. Bodeneinbaukassette nach Anspruch 1 oder 2, **dadurch gekennzeichnet, dass** die Außenwände von Oberteil (14) und Unterteil (12) einen quadratischen, rechteckigen oder kreisförmigen Außenumfang der Bodeneinbaukassette (10) definieren.

4. Bodeneinbaukassette nach wenigstens einem der vorstehenden Ansprüche, **dadurch gekennzeichnet, dass** das Unterteil (12) eine Bodenplatte aufweist, die mit vorbereiteten Öffnungen (34) zum Einführen von Leerrohren, Kabeln oder dergleichen versehen ist.

5. Bodeneinbaukassette nach wenigstens einem der vorstehenden Ansprüche, **dadurch gekennzeichnet, dass** das Oberteil (14) mit wenigstens zwei gegenüberliegenden Rastleitern (38) zum Einsetzen von Gerätebechern zum Einbau von Installationsgeräten versehen ist.

6. Bodeneinbaukassette nach wenigstens einem der vorstehenden Ansprüche, **dadurch gekennzeichnet, dass** das Oberteil (14) und/oder das Unterteil (12) als Blechbiegeteil ausgebildet sind.

## Claims

1. Floor installation box for electric installation devices having an upper part (14) and a lower part (12), the upper part (14) and the lower part (12) being displaceable relative to one another by means of leveling devices (16), the outer walls of the upper part (14) and the lower part (12) forming a lateral limit of the floor installation box being designed substantially smooth-surfaced and without undercuts, and substantially flush with one another or having a slight offset in the area of the material thickness of the outer walls, **characterized in that** the upper part (14) has an all-round frame (26) open to the top as a support for a box lid (42) and an all-round frame open to the bottom and placed with an all-round flange (32) against an all-round flange (22) of the frame (26) open to the top, and has an all-round skirt (28) adjoining in the downward direction the frame (26) open to the top.

2. Floor installation box according to Claim 1, **characterized in that** the leveling devices (16) are arranged inside an inner space enclosed by the outer walls of the upper part (14) and of the lower part (12) and **in that** the leveling devices (16) comprise a threaded bolt (18) connected to a base plate (13) of the lower part (12) and a tube (20) connected to the upper part (14), said tube (20) being fastened with its top end to the horizontally inward-extending flange (22) of the frame (26) open to the top.

3. Floor installation box according to Claim 1 or Claim 2, **characterized in that** the outer walls of the upper part (14) and the lower part (12) define a square, rectangular or circular outer circumference of the floor installation box (10).

4. Floor installation box according to at least one of the preceding claims, **characterized in that** the lower part (12) has a base plate provided with prepared openings (34) for insertion of empty tubes, cables or the like.

5. Floor installation box according to at least one of the preceding claims, **characterized in that** the upper part (14) is provided with at least two opposite rows of slots (38) for insertion of device cups for the installation of installation devices.

6. Floor installation box according to at least one of the preceding claims, **characterized in that** the upper part (14) and/or the lower part (12) are designed as bent sheet-metal parts.

## Revendications

1. Cassette d'installation au sol pour appareils d'installation électriques avec une partie supérieure (14) et une partie inférieure (12), sachant que la partie supérieure (14) et la partie inférieure (12) peuvent être déplacées l'une par rapport à l'autre grâce à des dispositifs de mise à niveau (16), que les parois extérieures de la partie supérieure (14) et de la partie inférieure (12) formant une limite latérale de la cassette d'installation au sol (10) sont essentiellement lisses et sans évidement et s'alignent essentiellement l'une sur l'autre ou présente un faible décalage dans la zone de l'épaisseur du matériau des parois extérieures, **caractérisée en ce que** la partie supérieure (14) présente un cadre continu ouvert vers le haut (26) en tant que support pour un couvercle de cassette (42) et un cadre continu ouvert vers le bas qui est posé par un rebord continu (32) contre un rebord continu (22) du cadre ouvert vers le haut (26) et qui présente un tablier (28) continu se rattachant en direction du bas au cadre ouvert vers le haut (26).

2. Cassette d'installation au sol selon la revendication 1, **caractérisée en ce que** les dispositifs de mise à niveau (16) sont disposés à l'intérieur d'une espace fermé par les parois extérieures de la partie supérieure (14) et de la partie inférieure (12), et que les dispositifs de mise à niveau (16) sont constitués d'un boulon fileté (18) relié à une plaque de fond (13) de la partie inférieure (12) et d'un tube (20) relié à la partie supérieure (14), sachant que le tube (20) est fixé par son extrémité supérieure au rebord (22) du cadre ouvert vers le haut (26) s'étendant horizontalement vers l'intérieur.

3. Cassette d'installation au sol selon la revendication 1 ou 2, **caractérisée en ce que** les parois extérieures de la partie supérieure (14) et de la partie inférieure (12) définissent une circonférence extérieure carré, rectangulaire ou circulaire de la cassette d'installation au sol (10).

4. Cassette d'installation au sol selon au moins l'une des revendications précédentes, **caractérisée en ce que** la partie inférieure (12) présente une plaque de fond pourvue d'ouvertures préparées (34) pour l'introduction de gaines, câbles et autres éléments similaires.

5. Cassette d'installation au sol selon au moins l'une des revendications précédentes, **caractérisée en ce que** la partie supérieure (14) est pourvue d'au moins deux échelles de fixation (38) opposées pour la mise en place de boîtes de montage pour les appareils d'installation.

6. Cassette d'installation au sol selon au moins l'une des revendications précédentes, **caractérisée en ce que** la partie supérieure (14) et/ou la partie inférieure (12) sont conçues sous forme de pièce de tôle cintrée.
